# EUROPEAN PATENT SPECIFICATION

(11) **EP 1 065 136 B1**
(45) Date of publication and mention of the grant of the patent: **08.10.2003**
(21) Application number: 00111799.3
(22) Date of filing: 05.06.2000
(51) Int. Cl.: B62D 21/16

(54) **A motor vehicle with a front service compartment separate from the engine compartment**
Kraftfahrzeug mit einem vorderen Wartungsraum, der vom Motorraum getrennt ist
Véhicule avec un compartiment d'entretien avant séparé du compartiment moteur

(30) Priority: 08.06.1999 IT TO990106
(43) Date of publication of application: 03.01.2001
(73) Proprietor: FIAT AUTO S.p.A., 10135 Torino (IT)
(72) Inventor: Giolito, Roberto, 10128 Torino (IT)
(74) Representative: Fioravanti, Corrado

(56) References cited:
- DE-C- 19 524 120

## Description

The present invention relates to a motor vehicle with a front service compartment separate from the engine compartment.

The fillers for topping up the engine oil, the engine cooling fluid and the windscreen washer fluid are customarily arranged inside the engine compartment, e.g. DE 19 524 120 C; it can therefore be understood that the normal user, that is to say, an unqualified user, when carrying out the normal maintenance checks, may also be tempted to touch other mechanical parts which instead require the intervention of a qualified mechanic. It can also be understood that the user, when opening or closing the fillers, with the engine hot, may receive burns or spill the liquids outside the fillers, soiling other components housed in the engine compartment.

It is an aim of the present invention to provide a motor vehicle which allows the user to gain access easily but exclusively to those normal service and maintenance functions which prove necessary when using the motor vehicle such as, for example, topping up the engine oil, the engine cooling fluid and the wind-screen washer fluid, and further functions, whereas it is desired to make access to the engine and to other vital components of the vehicle more difficult, so that it is less likely for unauthorized or unqualified persons to tamper with or interfere inappropriately with the mechanical components which are customarily accessible by opening the engine bonnet.

A further aim of the present invention is to provide a motor vehicle of restricted weight, which makes it possible to eliminate operating and articulation devices provided for the opening of engine bonnets of the conventional type, customarily mounted in an articulated manner on the bodywork.

These and other aims are fulfilled, according to the present invention, by a motor vehicle as defined in claim 1.

Other important characteristics are referred to in the other dependent claims.

The characteristics and advantages of the invention will become clear from the detailed description of some of its exemplary embodiments, provided by way of non-limiting example., with reference to the appended drawings, in which:
Figure 1 is a perspective view of a motor vehicle according to the present invention;
Figure 2 is a partially exploded perspective view of the front part of a first embodiment of the vehicle according to the present invention;
Figure 3 is a diagrammatic view in vertical section of the front part of the vehicle in Figure 2;
Figure 4 is a perspective view of the front part of a second embodiment of the vehicle according to the invention;
Figure 5 is a diagrammatic perspective view of a detail of the system for retaining and adjusting one of the front optical units of the motor vehicle according to the present invention.

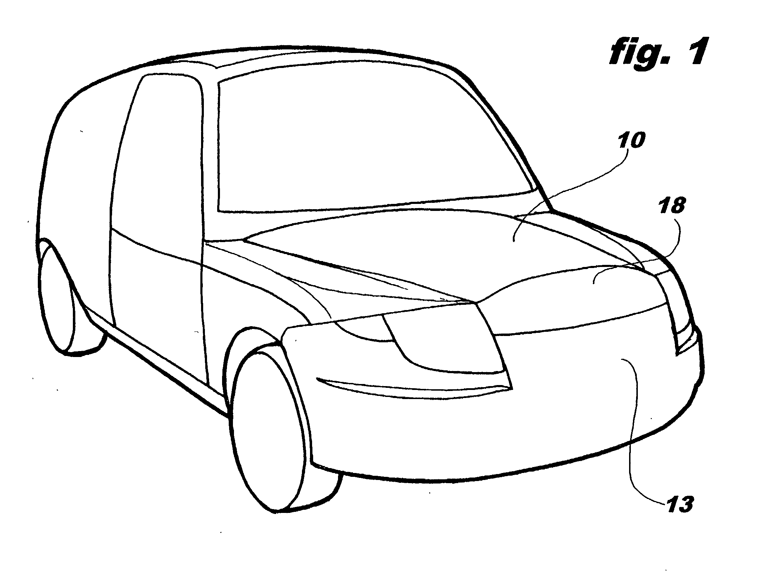

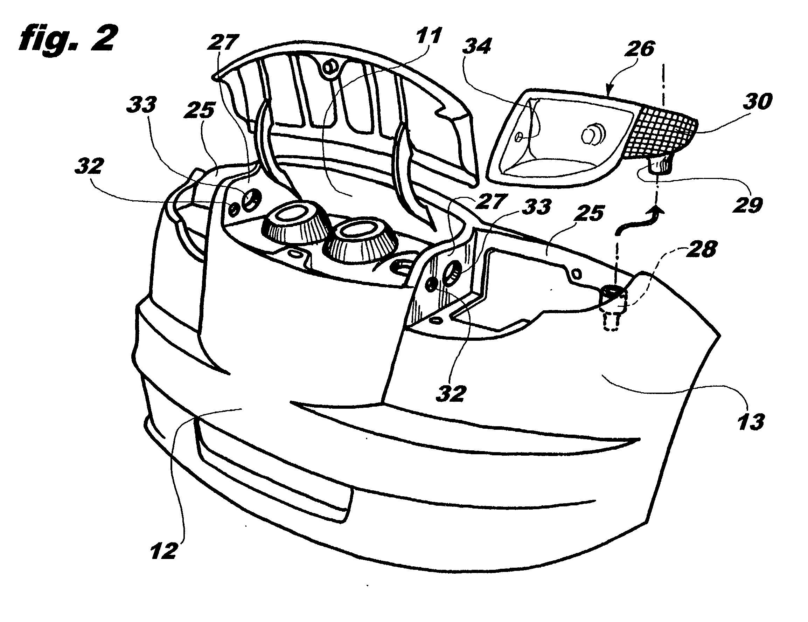

Referring initially to Figures 1 and 2, a motor vehicle according to the invention is provided with an engine bonnet 10 and has, in the front part of the motor vehicle above a front bumper member 12, a compartment 11 arranged in front of the bonnet 10 and separated from the engine compartment (not illustrated) closed by said bonnet; preferably, the compartment 11 is formed of a body 13 produced by moulding of plastics material integrally with the bumper 12.

Inside the compartment 11 appear various devices which make it possible to carry out normal maintenance operations on the motor vehicle and which do not require the intervention of specialized manpower: a filler 14 for topping up the engine oil, a filler 15 for topping up the engine cooling fluid, a filler 16 for topping up the windscreen washer or headlight washer fluid and, optionally, a pair of terminals 17 connected to the poles of the battery (not illustrated) for the purpose of carrying out emergency starts by means of auxiliary batteries.

The compartment 11 is provided with a cover or door 18 equipped with a central arm 19, formed in one piece with the cover 18, articulated on the body 13 for opening and closing by pivoting in a vertical plane. In the closed position illustrated in Figure 1, the cover 18 joins smoothly with the engine bonnet 10.

On the cover 18 there is further provided a locking device 20 comprising a latch member 21 which can lock in a catch member 22 fixed to the body 13.

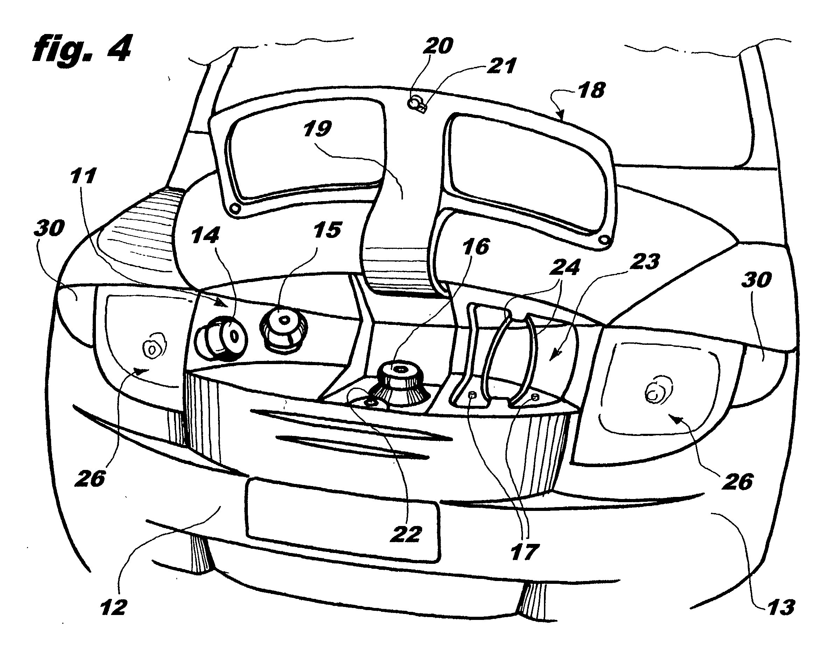

In the embodiment illustrated in Figure 4, in the opposite part of the compartment from that which houses the fillers 14 and 15, there is formed a compartment portion 23 with a pair of elastic bands 24 which may serve for example to hold a fluid container (not illustrated) or other articles.

Referring in particular to Figure 2, the body 13, preferably produced by moulding of plastics material, forms at the sides of the central compartment 11 a pair of concave seatings 25 suitable for housing the respective front optical units 26 of the motor vehicle.

In the preferred embodiment, the seatings 25 for the optical units are separated from the central compartment 11 by means of respective vertical dividing walls 27, and each optical unit is mounted rotatably on the body 13 by means of a bush portion 29 inserted in a cylindrical support seating 28 at the turn indicator 30.

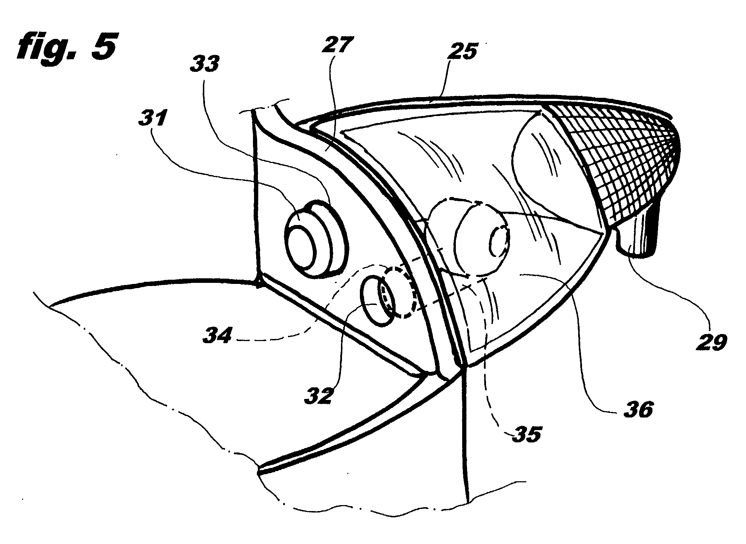

As illustrated also in Figure 5, the optical units 26 each have a retaining member 31, for example a release push button, which engages in a seating 32 provided in the vertical walls 27. By unlocking the push button 31, the optical unit can be rotated about the hinge 28, thus making it possible to remove the optical unit by lifting it upwards as illustrated for example by the arrow A, or simply allowing access to a bulb to be replaced; the electrical cables (not illustrated) for supplying the headlamp bulb will be of a length such as to permit such movement of the optical unit.

Also in the partition wall 27 there is formed a further aperture 33 which, when the optical unit is locked in its normal working configuration in Figure 5, is aligned with the other aperture 34 provided laterally in the body of the optical unit; the apertures 33 and 34, thus aligned, permit the passage of a tool such as, for example, a screwdriver, by means of which, after opening the cover 18, it is possible to adjust, in a manner which is known per se, the angle of the headlamp in question by acting on an adjustable pin 35 on which is mounted a parabola element 36.

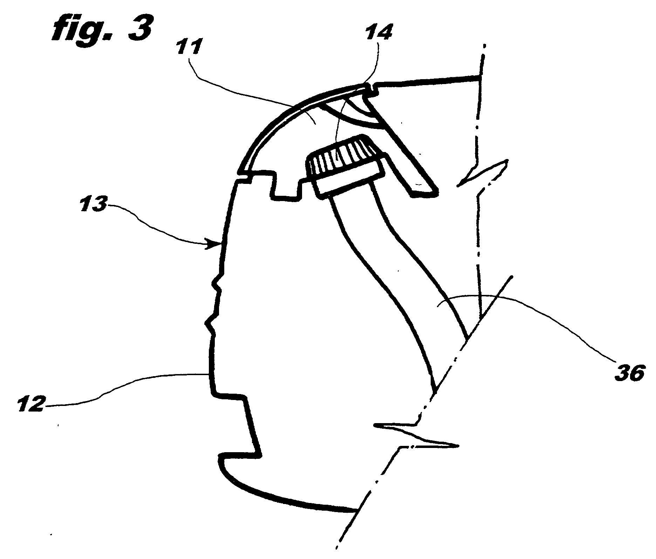

With reference to Figure 3, it is possible to see how the filler 14 for topping up the oil (and, similarly, also the filler 15 for the engine cooling fluid) are inclined slightly forwards so as to render the topping up operations easier and more precise. From the filler 14 there extends underneath, a rigid tube 36 which conveys the oil into the sump (not illustrated). According to a variant not illustrated, the tube 36 can be connected directly to the engine by being joined to the tappet cover.

Also according to the present invention, the bonnet 10 which closes the engine compartment is not mounted on the motor vehicle in a conventional manner by means of articulations and able to be opened by means of a remote control placed inside the interior, but is removably fixed to the bodywork by means of fixing devices of a different type, such as, for example, quarter-turn screws (not illustrated) placed in a position not immediately accessible from the outside of the vehicle. In this way, besides eliminating the weight and the costs involved in the provision of the conventional control with associated bowden cable and of the articulations for the opening of the bonnet, access to the engine and to the mechanical components which require specialist intervention is rendered generally more difficult, while the operations of topping up fluids which can be carried out by any user are made simpler and safer.

It will also be appreciated that, since the fillers 14-16 are contained in a compartment separate from the engine compartment, there is no danger of soiling other components if the fluids are spilled outside the actual filler; moreover, the compartment 11 will customarily be at a markedly lower temperature than that prevailing inside the engine compartment, so that there is a reduced risk of burning the hands owing to contact with hot mechanical parts.

## Claims

1. A motor vehicle comprising:
a shaped body (13), arranged above a front bumper member (12), forming a compartment (11) having a plurality of fillers (14, 15, 16) for topping up the engine oil and other fluids used by the vehicle;
a cover (18) that can be opened to allow access to the said compartment (11);
an engine bonnet (10), arranged behind the said compartment (11), and adjacent to the cover (18), which can be opened independently of said cover.

2. A motor vehicle according to claim 1, wherein said body (13) forms, on two opposed sides of said compartment (11), lateral concave seatings (25) suitable for receiving respective front optical units (26).

3. A motor vehicle according to claim 2, wherein said optical units (26) are mounted rotatably on said body (13) about respective laterally external and substantially vertical hinge axes.

4. A motor vehicle according to claim 3, wherein said body (13) is further provided with respective dividing walls (27) between said compartment (11) and said lateral seatings (25).

5. A motor vehicle according to claim 4, wherein each of said dividing walls (27) has retaining means or seatings (32) for engagement with corresponding retaining seatings or means (31) integral with the optical units (26) for retaining the latter in a working position.

6. A motor vehicle according to claim 4, wherein:
- each of said optical units (26) comprises an adjustment means for the angle of the headlamp;
- each optical unit (26) has a first aperture (34), which can be positioned adjacent to said dividing wall (27), for the passage of a tool for adjustment of the angle of the headlamps;
- each of said dividing walls (27) has a second aperture (33) capable of permitting the passage of said adjusting tool, said first and second apertures being arranged and shaped such as to be aligned when the optical units are in said working state.

7. A motor vehicle according to claim 1, wherein said compartment (11) also forms a portion (23) of the compartment for holding articles.

8. A motor vehicle according to claim 1, wherein said body (13) is produced integrally with said front bumper member (12).

9. A motor vehicle according to claim 1, wherein the cover (18) is mounted in an articulated manner on said body (13) by means of at least one arcuate arm (19) integral with the cover itself.

10. A motor vehicle according to claim 1, wherein the cover (18) has a closure position in which it joins the engine compartment (10) in a uniform profile.

11. A motor vehicle according to claim 1, wherein the cover (18) is provided with a locking device (20) having a latch member (21) that can be engaged in a catch means (22) integral with said body (13).

12. A motor vehicle according to claim 1, wherein the bonnet (10) is removably mounted on the motor vehicle by means of releasable fixing devices.

13. A motor vehicle according to claim 12, wherein said fixing devices are placed in a position not immediately accessible from the outside of the vehicle.

14. A motor vehicle according to claim 1, wherein at least one of said fillers (14, 15) for the oil and for the cooling fluid is inclined forwards.

15. A motor vehicle according to claim 1, comprising a pipe (36) which extends from the filler (14) for the engine oil to the sump of the motor vehicle.

16. A motor vehicle according to claim 1, comprising a pipe (36) which extends from the filler (14) for the engine oil to the tappet cover of the engine of the motor vehicle.

17. A motor vehicle according to claim 1, wherein said compartment also has a pair of terminals (17) connected to the poles of the battery of the motor vehicle.

## Patentansprüche

1. Kraftfahrzeug mit:
einem geformten Körper (13), der oberhalb eines vorderen Stoßstangenelements (12) angeordnet ist und ein Abteil (11) bildet, das eine Vielzahl von Einfüllstutzen (14, 15, 16) besitzt, um das Motoröl sowie andere Flüssigkeiten nachzufüllen, die das Fahrzeug verwendet;
eine Abdeckung (18), die geöffnet werden kann, um einen Zugang zum Abteil (11) zu ermöglichen;
eine Motorhaube (10), die hinter dem Abteil (11) und neben der Abdeckung (18) angeordnet ist, wobei sie unabhängig von der Abdeckung geöffnet werden kann.

2. Kraftfahrzeug gemäß Anspruch 1, wobei der Körper (13) an zwei gegenüber liegenden Seiten des Abteils (11) seitliche konkave Aufnahmen (25) bildet, die dazu dienen, um entsprechende vordere optische Einheiten (26) aufzunehmen.

3. Kraftfahrzeug gemäß Anspruch 2, wobei die optischen Einheiten (26) am Körper (13) um entsprechende seitliche, externe und im Wesentlichen vertikale Gelenksachsen drehbar befestigt sind.

4. Kraftfahrzeug gemäß Anspruch 3, wobei der Körper (13) zwischen dem Abteil (11) und den seitlichen Aufnahmen (25) weiters mit entsprechenden Trennwänden (27) versehen ist.

5. Kraftfahrzeug gemäß Anspruch 4, wobei jede der Trennwände (27) Halteeinrichtungen oder Aufnahmen (32) besitzt, um in entsprechende Halteaufnahmen oder Einrichtungen (31) einzugreifen, die in die optischen Einheiten (26) integriert sind, um diese in einer Arbeitsstellung zu halten.

6. Kraftfahrzeug gemäß Anspruch 4, wobei:
- jede der optischen Einheiten (26) eine Einstelleinrichtung für den Winkel des Scheinwerfers enthält;
- jede optische Einheit (26) eine erste Öffnung (34) besitzt, die neben der Trennwand (27) angeordnet werden kann, um ein Werkzeug zum Einstellen des Winkels der Scheinwerfer einführen zu können;
- jede der Trennwände (27) eine zweite Öffnung (33) besitzt, in die ein Einstellwerkzeug eingesetzt werden kann, wobei die erste und zweite Öffnung so angeordnet und geformt sind, dass sie dann ausgerichtet sind, wenn sich die optischen Einheiten in der Arbeitsstellung befinden.

7. Kraftfahrzeug gemäß Anspruch 1, wobei das Abteil (11) weiters einen Bereich (23) des Abteils bildet, um Gegenstände zu halten.

8. Kraftfahrzeug gemäß Anspruch 1, wobei der Körper (13) gemeinsam mit dem vorderen Stoßstangenelement (12) hergestellt wird.

9. Kraftfahrzeug gemäß Anspruch 1, wobei die Abdeckung (18) am Körper (13) mit zumindest einem bogenförmigen Arm (19) gelenkig befestigt ist, der mit der Abdeckung gemeinsam ausgebildet ist.

10. Kraftfahrzeug gemäß Anspruch 1, wobei die Abdeckung (18) eine geschlossene Stellung besitzt, in der sie sich mit dem Motorraum (10) in einem einheitlichen Profil vereinigt.

11. Kraftfahrzeug gemäß Anspruch 1, wobei die Abdeckung (18) mit einer Verriegelungseinrichtung (20) versehen ist, die ein Verriegelungselement (21) besitzt, das in eine Arretiereinrichtung (22) eingreifen kann, die mit dem Körper (13) gemeinsam ausgebildet ist.

12. Kraftfahrzeug gemäß Anspruch 1, wobei die Motorhaube (10) auf dem Kraftfahrzeug mit Hilfe von freigebbaren Befestigungseinrichtungen abnehmbar angebracht ist.

13. Kraftfahrzeug gemäß Anspruch 12, wobei die Befestigungseinrichtungen an einer Stelle angeordnet sind, die von außerhalb des Fahrzeugs nicht unmittelbar zugänglich ist.

14. Kraftfahrzeug gemäß Anspruch 1, wobei zumindest einer der Einfüllstutzen (14, 15) für das Öl und für die Kühlflüssigkeit nach vorne geneigt ist.

15. Kraftfahrzeug gemäß Anspruch 1, das ein Rohr (36) enthält, das vom Einfüllstutzen (14) für das Motoröl zum Sumpf des Kraftfahrzeugs verläuft.

16. Kraftfahrzeug gemäß Anspruch 1, das ein Rohr (36) enthält, das vom Einfüllstutzen (14) für das Motoröl zum Ventilgehäusedeckel des Motors des Kraftfahrzeugs verläuft.

17. Kraftfahrzeug gemäß Anspruch 1, wobei das Abteil weiters ein Paar von Anschlüssen (17) besitzt, die mit den Polen der Batterie des Kraftfahrzeugs verbunden sind.

## Revendications

1. Véhicule à moteur, comprenant :
un corps conformé (13) agencé au-dessus d'un élément (12) de pare-chocs avant,
formant un compartiment (11) ayant une pluralité de matières de remplissage (14, 15, 16) pour le ravitaillement de l'huile moteur et d'autres fluides utilisés par le véhicule ;
un couvercle (18) qui peut être ouvert pour permettre l'accès audit compartiment (11); et
un capot moteur (10), agencé derrière ledit compartiment (11) et adjacent au couvercle (18), qui peut être ouvert indépendamment dudit couvercle.

2. Véhicule à moteur selon la revendication 1, dans lequel ledit corps (13) forme, sur deux côtés opposés dudit compartiment (11), des sièges latéraux concaves (25) qui conviennent pour recevoir des unités optiques frontales respectives (26).

3. Véhicule à moteur selon la revendication 2, dans lequel lesdites unités optiques (26) sont montées en rotation sur ledit corps (13) autour d'axes d'articulation respectifs latéralement vers l'extérieur et sensiblement verticaux.

4. Véhicule à moteur selon la revendication 3, dans lequel ledit corps (13) est en outre pourvu de parois de division respectives (27) entre ledit compartiment (11) et lesdits sièges (25).

5. Véhicule à moteur selon la revendication 4, dans lequel chacune desdites parois de division (27) possède des moyens de retenue ou des sièges (32) en vue d'un engagement avec des sièges de retenue ou des moyens (31) correspondants intégrés avec les unités optiques (26) pour retenir ces dernières dans une position de fonctionnement.

6. Véhicule à moteur selon la revendication 4, dans lequel :
chacune desdites unités optiques (26) comprend des moyens d'ajustement pour l'angle du feu de route ;
-- chaque unité optique (26) a une première ouverture (34) qui peut être positionnée adjacente à ladite paroi de division (27), pour le passage d'un outil destiné à l'ajustement de l'angle des feux de route ; et
-- chacune desdites parois de division (27) a une seconde ouverture (33) capable de permettre le passage dudit outil d'ajustement, ladite première et ladite seconde ouverture étant agencées et conformées de manière à être alignées quand les unités optiques sont dans ledit état de fonctionnement.

7. Véhicule à moteur selon la revendication 1, dans lequel ledit compartiment (11) forme également une partie (23) du compartiment pour contenir des objets.

8. Véhicule à moteur selon la revendication 1, dans lequel ledit corps (13) est produit de façon intégrale avec ledit élément formant pare-chocs frontal (12).

9. Véhicule à moteur selon la revendication 1, dans lequel le couvercle (18) est monté de manière articulée sur ledit corps (13) au moyen d'au moins un bras arqué (19) intégré avec le couvercle lui-même.

10. Véhicule à moteur selon la revendication 1, dans lequel le couvercle (18) a une position de fermeture dans laquelle il rejoint le compartiment moteur (10) avec un profil uniforme.

11. Véhicule à moteur selon la revendication 1, dans lequel le couvercle (18) est pourvu d'un dispositif de verrouillage (20) ayant un élément de verrou (21) qui peut être engagé dans un moyen de retenue (22) intégré avec ledit corps (13).

12. Véhicule à moteur selon la revendication 1, dans lequel le capot (10) est monté de façon amovible sur le véhicule à moteur au moyen de dispositifs de fixation libérables.

13. Véhicule à moteur selon la revendication 12, dans lequel lesdits dispositifs de fixation sont placés dans une position qui n'est pas immédiatement accessible depuis l'extérieur du véhicule.

14. Véhicule à moteur selon la revendication 1, dans lequel l'une au moins desdites matières de remplissage (14, 15) pour l'huile et pour le fluide de refroidissement est inclinée vers l'avant.

15. Véhicule à moteur selon la revendication 1, comprenant un tube (36) qui s'étend depuis ladite matière de remplissage (14) pour l'huile moteur vers la bâche du véhicule à moteur.

16. Véhicule à moteur selon la revendication 1, comprenant un tube (36) qui s'étend depuis ladite matière de remplissage (14) pour l'huile moteur vers le couvre-culbuteurs du moteur du véhicule à moteur.

17. Véhicule à moteur selon la revendication 1, dans lequel ledit compartiment comporte aussi une paire de bornes (17) connectées aux pôles de la batterie du véhicule à moteur.
